# EUROPÄISCHE PATENTSCHRIFT

(11) **EP 3 530 892 B1**
(45) Veröffentlichungstag und Bekanntmachung des Hinweises auf die Patenterteilung: **19.05.2021**
(21) Anmeldenummer: 19153490.8
(22) Anmeldetag: 24.01.2019
(51) Int. Cl.: F01L 1/344

(54) **HYDRAULIKVENTIL FÜR EINEN SCHWENKMOTORVERSTELLER EINER NOCKENWELLE**
HYDRAULIC VALVE FOR A PIVOTING ENGINE ADJUSTER OF A CAMSHAFT
SOUPAPE HYDRAULIQUE POUR UN DISPOSITIF DE RÉGLAGE DE MOTEUR OSCILLANT D'UN ARBRE À CAMES

(30) Priorität: 21.02.2018 DE 102018103915; 17.01.2019 DE 102019101115
(43) Veröffentlichungstag der Anmeldung: 28.08.2019
(73) Patentinhaber: ECO Holding 1 GmbH, 97828 Marktheidenfeld (DE)
(72) Erfinder: Diederichs, Udo, 72622 Nürtingen (DE); Brumm, Michael, 72535 Herolstatt (DE)

(56) Entgegenhaltungen:
- EP-A1- 2 905 434
- EP-A2- 1 291 563
- CN-A- 107 100 690
- DE-A1-102008 055 175
- DE-A1-102010 005 604
- DE-A1-102013 104 031

## Beschreibung

### Technisches Gebiet

Die Erfindung betrifft ein Hydraulikventil, insbesondere für einen Schwenkmotorversteller einer Nockenwelle einer Brennkraftmaschine eines Kraftfahrzeugs. Des Weiteren betrifft die Erfindung ein Ventil für einen Schwenkmotorversteller einer Nockenwelle sowie ein Verfahren zum Betreiben eines Ventils für einen Schwenkmotorversteller einer Nockenwelle.

### Stand der Technik

Bei dem aus der DE 10 2006 012 775 A1 bekannten Schwenkmotorverstellsystem sind die Druckkammern des Rotors mit Rückschlagventilen versehen, so dass Druckspitzen, wie sie bei einer raschen Verstellung auftreten, genutzt werden.

Aus der EP 2 375 014 A1 und der EP 2 905 434 A1 ist bekannt, Rückschlagventile zur Ausnutzung von Nockenwellenwechselmomenten in das Zentralventil zu integrieren, indem Bandrückschlagventile, welche beispielsweise aus der EP 1 291 563 A1 bekannt sind, an der Innenseite der Buchse angebracht werden. An den beiden Arbeitsanschlüssen und an dem Versorgungsanschluss der Buchse drückt jeweils ein Bandrückschlagventil von innen gegen die Buchseninnenseite. Wenn ausreichend hoher Druck an dem entsprechenden Anschluss anliegt, öffnet sich das Bandrückschlagventil, so dass an einem Arbeitsanschluss in das Zentralventil hineinströmende Hydraulikflüssigkeit zusammen mit Hydraulikfluid von dem Versorgungsanschluss dem anderen Arbeitsanschluss zugeführt werden kann. Ausgehend von einer Mittelstellung des Zentralventils ist zunächst eine Schaltstellung proportional ansteuerbar, in welcher die Druckspitzen des zu entlastenden Arbeitsanschlusses gegenüber dem zu belastenden Arbeitsanschluss gesperrt sind. In jedem Anschluss ist eine weitere Schaltstellung zur Nutzung der Nockenwellenwechselmomente ansteuerbar.

Aus der CN 107100690 A1 ist beispielhaft ein Schwenkmotorversteller mit einem Zentralventil zu entnehmen.

Die DE 10 2008 055 175 A1 offenbart ein Hydraulikventil für einen Schwenkmotorversteller, welches im Kolben angeordnete Rückschlagventile in Form von Kugelsitzventilen zur Ausnutzung von Nockenwellenwechselmomenten aufweist.

Aus der DE 10 2010 005 604 A1 ist es bekannt, in ein Hydraulikventil ein Doppelrückschlagventil zu integrieren und Steuerkanten eines Kolbens derart anzuordnen, dass in den Endstellungen des Kolbens ein Durchfluss des Druckmittels von der Druckmittelpumpe zu einer ersten Arbeitskammer und ein Durchfluss durch das Doppelrückschlagventil von einer zweiten Arbeitskammer in die erste Arbeitskammer ermöglicht ist.

Ferner ist aus der DE 10 2013 104 031 A1 ein Zentralventil für einen Schwenkmotorversteller zu entnehmen, dessen Kolben auf seiner Außenseite ein oder mehrere Rückschlagventile zur Ausnutzung von Nockenwellenwechselmomenten aufweist.

### Offenbarung der Erfindung

Eine Aufgabe der Erfindung ist es, ein Ventil zu schaffen, das in einer einfachen und kompakten Bauweise ein besseres Systemverhalten eines Schwenkmotorverstellers ermöglicht sowie ein effizientes Konzept eines Ventils und eines Verfahrens zum Betreiben eines Ventils eines Nockenwellenverstellers bereitzustellen, das ein verbessertes Kaltverhalten ermöglicht.

Die vorgenannten Aufgaben werden gemäß den unabhängigen Ansprüchen gelöst.

Günstige Ausgestaltungen und Vorteile der Erfindung ergeben sich aus den weiteren Ansprüchen, der Beschreibung und der Zeichnung.

Es wird ein Ventil für einen Schwenkmotorversteller einer Nockenwelle vorgeschlagen, mit einer Buchse mit einem in einer Bohrung entlang einer Längsrichtung zwischen einer ersten Endposition und einer zweiten Endposition verschiebbar angeordneten Kolben, einem Versorgungsanschluss zum Zuführen eines Hydraulikfluids, wenigstens einem ersten Arbeitsanschluss und einem zweiten Arbeitsanschluss, sowie wenigstens einem ersten und einem zweiten Tankabflussanschluss zum Ableiten des Hydraulikfluids, wobei der erste Arbeitsanschluss und der zweite Arbeitsanschluss durch geeignetes Positionieren des Kolbens miteinander fluidmäßig verbindbar ausgebildet sind und der Kolben jeweils an seinen axial außenliegenden Enden angeordnete äußere Ringstege aufweist, um den Tankabflussanschluss in der ersten Endposition vollständig zu verschließen und den Tankabflussanschluss in der zweiten Endposition vollständig zu verschließen. Dadurch kann beispielsweise der technische Vorteil erreicht werden, dass einerseits die sogenannte Fast-Phaser-Funktion als auch eine verbesserte Funktion im unteren Temperaturbereich in einem Ventil sichergestellt werden kann. Wie beispielhaft ausgeführt, sind in einem Nockenwellenversteller des Flügelzellentyps hydraulische Verbindungswege von einer Kammer über ein Ventil in eine entgegengesetzte Kammer vorgesehen. In Abhängigkeit des Steuerverhaltens des Ventils können die Verbindungswege zum wechselseitigen Durchströmen eingesetzt werden, wodurch Hydraulikfluid sowohl aus der ersten Kammer ausgeströmt als auch in die zweite Kammer des Flügelzellenverstellers eingeströmt wird. Entsprechend ist das Fluid auch aus der zweiten Kammer ausströmbar und in die erste Kammer einströmbar. Um das Systemverhalten des Nockenwellenverstellers zu beschleunigen sieht die Fast-Phaser-Funktion einen Bypass vor, welcher ein schnelles Umleiten des Fluids direkt von der ersten Kammer in die zweite Kammer oder anders herum ermöglicht. Mittels Rückschlagventilen kann zusätzlich realisiert werden, dass die Bypass-Funktion erst ab einem bestimmten Schwellenwert möglich wird. Die verbesserte Funktion im unteren Temperaturbereich resultiert aus der erfindungsgemäßen Anordnung der äußeren Ringstege, welche in den Endpositionen des Kolbens den jeweils zugeordneten Tankabflussanschluss vollständig verschließen, dafür jedoch den gegenüberliegenden Tankabflussanschluss freigeben. Das Freigeben des gegenüberliegenden Tankabflussanschlusses bringt beispielsweise den Vorteil mit sich, dass der Ölaustausch auch bei zähflüssigem kaltem ÖI gut funktioniert. Insgesamt ergibt sich bei dem erfindungsgemäßen Ventil eine leicht reduzierte Verstellgeschwindigkeit im unteren Drehzahlbereich im Vergleich zu einem reinen Fast-Phaser-Ventil. Zusätzlich ergeben sich eine deutliche Steigerung der Verstellgeschwindigkeit im oberen Drehzahlbereich, sowie die bereits ausgeführte verbesserte Funktion im unteren Temperaturbereich.

Um das Verschließen und das Freigeben der Tankabflussanschlüsse präzise zu steuern, weist die Buchse im Bereich der Bohrung zwei nutenförmige Ausnehmungen auf, welche jeweils den äußeren Ringstegen zugeordnet sind. Durch einen Ringspalt, welcher zwischen einem äußeren Ringsteg und einer zugeordneten nutenförmigen Ausnehmung ausbildbar ist, kann der Fluidstrom gesteuert werden. Beispielsweise sind die nutenförmigen Ausnehmungen breiter ausgeführt als die Wandstärke der äußeren Ringstege. Dadurch kann die Durchflussmenge des Fluids exakt gesteuert werden, solange sich ein äußerer Ringsteg im Bereich der nutenförmigen Ausnehmung befindet. Sobald ein äußerer Ringsteg vor oder hinter der nutenförmigen Ausnehmung positioniert ist, ist der jeweilige Tankabflussanschluss verschlossen.

Die nutenförmigen Ausnehmungen sind erfindungsgemäß in Längsrichtung jeweils zwischen dem Arbeitsanschluss und dem dazugehörigen Tankabflussanschluss angeordnet. Dadurch wird beispielsweise eine besonders kompakte Bauform des Ventils realisiert.

Um zusätzlich die gewünschte Fast-Phaser-Funktion des Ventils sicherzustellen, weist der Kolben zwischen den äußeren Ringstegen zwei innere Ringstege auf, welche jeweils dem ersten Arbeitsanschluss und dem zweiten Arbeitsanschluss zugeordnet sind. Die inneren Ringstege sind von den äußeren Ringstegen in Längsrichtung des Kolbens nach innen beabstandet angeordnet. Sie sind im Verhältnis zu den äußeren Ringstegen breiter ausgebildet, da sie positionsabhängig die Arbeitsanschlüsse vollständig verschließen müssen. Unmittelbar an den inneren Ringstegen angeordnet, befinden sich Rückschlagventile, welche den Schwellwert zur Freigabe des Bypasses bestimmen.

Gemäß einer bevorzugten Ausführungsform, ist der Kolben in eine erste Position überführbar, wobei beide Tankabflussanschlüsse durch die äußeren Ringstege verschlossen ausgebildet sind. Der zweite Arbeitsanschluss ist mit dem Versorgungsanschluss und der erste Arbeitsanschluss ist mit dem zweiten Arbeitsanschluss fluidmäßig verbindbar ausgebildet. Diese erste Position ist Teil des klassischen Regelbereichs eines Fast-Phaser-Ventils. Die Tankabflussanschlüsse sind verschlossen. Damit der Arbeitsanschluss mit dem zweiten Arbeitsanschluss verbunden werden kann (Fast-Phaser-Funktion), muss lediglich ein bestimmter Schwellwert überschritten werden, damit das zugeordnete Rückschlagventil geöffnet wird und ein Fluidstrom direkt von dem ersten Arbeitsanschluss zu dem zweiten Arbeitsanschluss erfolgt.

Um jeden Fluidstrom zu unterdrücken und einen stabilen Betriebszustand eines Verbrennungsmotors bei konstanter Drehzahl zu ermöglichen, ist der Kolben in eine zweite Position überführbar, wobei beide Tankabflussanschlüsse durch die äußeren Ringstege verschlossen ausgebildet sind und der erste Arbeitsanschluss sowie der zweite Arbeitsanschluss jeweils durch die inneren Ringstege verschlossen ausgebildet sind.

Gemäß einer zusätzlichen Ausführungsform, ist der Kolben in eine dritte Position überführbar, wobei beide Tankabflussanschlüsse durch die äußeren Ringstege verschlossen ausgebildet sind. Der erste Arbeitsanschluss ist mit dem Versorgungsanschluss und der erste Arbeitsanschluss ist mit dem zweiten Arbeitsanschluss fluidmäßig verbindbar ausgebildet.

Gemäß einer vorteilhaften Ausführungsform ist dem ersten Arbeitsanschluss und dem zweiten Arbeitsanschluss jeweils ein Rückschlagventil zugeordnet und der erste Arbeitsanschluss und der zweite Arbeitsanschluss sind durch ein Verschieben des Kolbens über wenigstens eines der Rückschlagventile wechselweise miteinander und/oder mit dem Versorgungsanschluss und/oder dem Tankabflussanschluss verbindbar. Das bzw. die Rückschlagventile können beispielsweise auf einer Außenseite des Kolbens angeordnet sein.

Gemäß einem weiteren Aspekt wird die Aufgabe mit einem Verfahren zum Betreiben eines Ventils gemäß einem der vorausgehenden Ausführungsformen gelöst. Hierbei wird in der ersten Endposition der Tankabflussanschluss durch einen äußeren Ringsteg vollständig verschlossen. Der Tankabflussanschluss wird durch einen Ringspalt zwischen einem äußeren Ringsteg und einer nutenförmigen Ausnehmung freigegeben, und der erste Arbeitsanschluss wird mit dem zweiten Arbeitsanschluss fluidmäßig verbunden. Zusätzlich wird der zweite Arbeitsanschluss mit dem Versorgungsanschluss fluidmäßig verbunden. Die sich aus dem Verfahren zum Betreiben eines Ventils ergebenden Vorteile, sind mit den Vorteilen aus dem Ventil oder aus dem Hydraulikventil vergleichbar. Sie betreffen einerseits eine Verbesserung der sogenannten Fast-Phaser-Funktion als auch eine verbesserte Funktion im unteren Temperaturbereich innerhalb des Ventils. Um das Systemverhalten des Nockenwellenverstellers zu beschleunigen sieht das Verfahren eine Fast-Phaser-Funktion über einen Bypass vor, welcher ein schnelles Umleiten des Fluids direkt von der ersten Kammer in die zweite Kammer oder anders herum ermöglicht. Eine verbesserte Funktion im unteren Temperaturbereich resultiert aus dem erfindungsgemäßen Betreiben des Ventils mit den äußeren Ringstegen, welche in den Endpositionen des Kolbens den jeweils zugeordneten Tankabflussanschluss vollständig verschließen, dafür jedoch den gegenüberliegenden Tankabflussanschluss freigeben. Das Freigeben des gegenüberliegenden Tankabflussanschlusses bringt beispielsweise den Vorteil mit sich, dass der Ölaustausch auch bei zähflüssigem kaltem Öl gut funktioniert. Insgesamt ergibt sich bei dem erfindungsgemäßen Verfahren im Vergleich zum Betreiben eines reinen Fast-Phaser-Ventils eine leicht reduzierte Verstellgeschwindigkeit im unteren Drehzahlbereich. Zusätzlich ergeben sich eine deutliche Steigerung der Verstellgeschwindigkeit im oberen Drehzahlbereich, sowie die bereits ausgeführte verbesserte Funktion im unteren Temperaturbereich.

Eine bevorzugte Ausführungsform betrifft das Verfahren zum Betreiben des Ventils wobei in einer ersten Position die Tankabflussanschlüsse durch die äußeren Ringstege vollständig verschlossen werden. Des Weiteren wird der erste Arbeitsanschluss mit dem zweiten Arbeitsanschluss fluidmäßig verbunden, und der zweite Arbeitsanschluss wird mit dem Versorgungsanschluss fluidmäßig verbunden. Dadurch ergibt sich beispielsweise der technische Vorteil, dass sich das Ventil ausschließlich im Regelbereich einer Fast-Phaser-Funktion befindet, wobei Leckage in Richtung der Tankabflussanschlüsse unterdrückt wird.

In einer weiteren Ausführungsform werden in einer zweiten Position die Tankabflussanschlüsse durch die äußeren Ringstege vollständig verschlossen, und der erste Arbeitsanschluss sowie der zweite Arbeitsanschluss B werden jeweils durch die inneren Ringstege fluidmäßig verschlossen. Dadurch wird beispielsweise der technische Vorteil erreicht, dass der Fluidstrom unterdrückt wird und ein stabiler Betriebszustand ermöglicht wird.

In der dritten Position werden die Tankabflussanschlüsse durch die äußeren Ringstege vollständig verschlossen, der erste Arbeitsanschluss wird mit dem zweiten Arbeitsanschluss fluidmäßig verbunden, und der erste Arbeitsanschluss wird mit dem Versorgungsanschluss fluidmäßig verbunden.

Nach einer weiteren Ausführungsform wird in der zweiten Endposition der Tankabflussanschluss durch einen äußeren Ringsteg vollständig verschlossen und der Tankabflussanschluss wird durch einen Ringspalt zwischen einem äußeren Ringsteg und einer nutenförmigen Ausnehmung freigegeben.

Um die Funktionsfähigkeit des Ventils besonders effizient zu gestalten, erfolgt das Überführen des Kolbens zwischen der ersten Endposition und einer zweiten Endposition stufenlos.

### Kurze Beschreibung der Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: ein Hydraulikventil zur Verstellung eines Schwenkmotorverstellers nach einem Ausführungsbeispiel der Erfindung in einer ersten Schaltstellung, dargestellt in einem Längsschnitt;

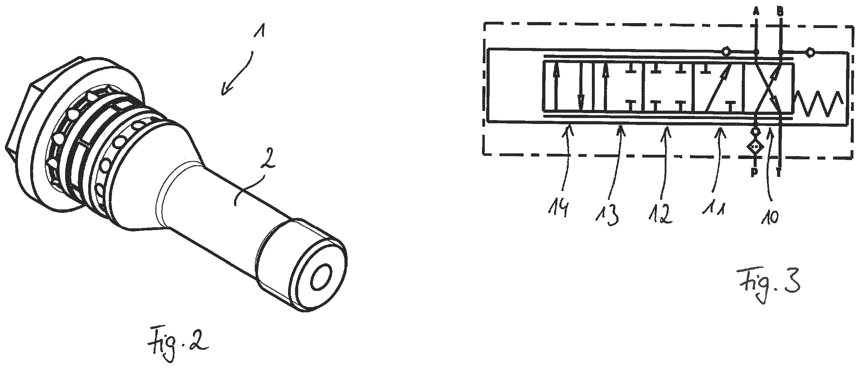

- Fig. 2: das Hydraulikventil gemäß Figur 1 in perspektivischer Darstellung;
- Fig. 3: ein Schaltschema des Hydraulikventils gemäß Figur 1;

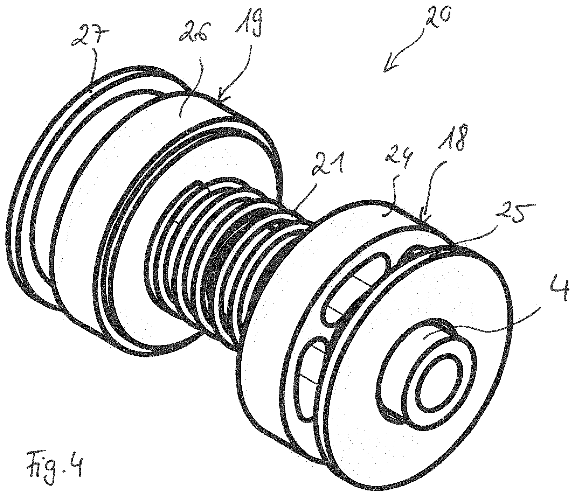

- Fig. 4: eine Kolbenbaugruppe des Hydraulikventils gemäß Figur 1 in perspektivischer Darstellung;
- Fig. 5: die Kolbenbaugruppe gemäß Figur 4 im Längsschnitt;

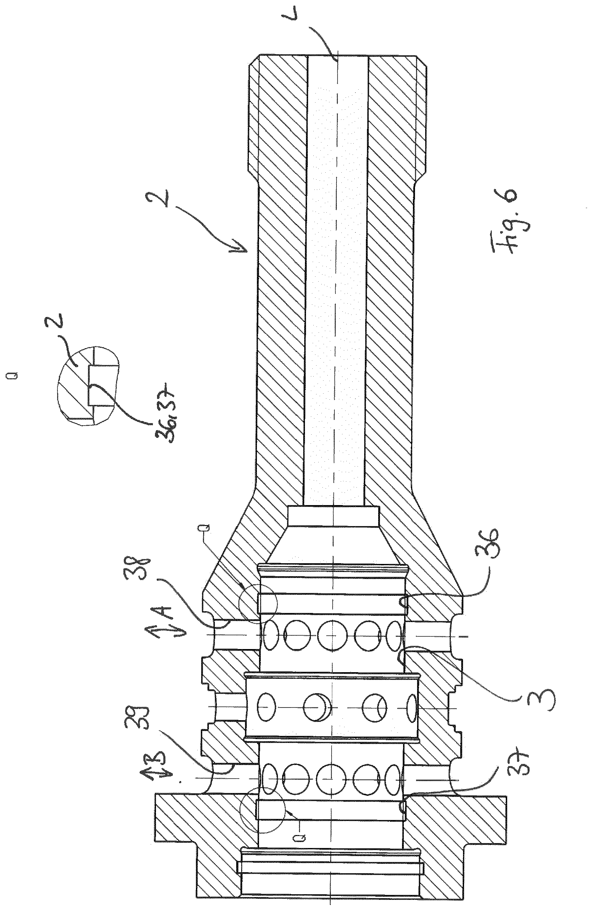

- Fig. 6: eine Buchse des Hydraulikventils gemäß Figur 1 im Längsschnitt und
- Fig. 7: eine Kennlinie des Hydraulikventils gemäß Figur 1.

Nachfolgende Beschreibung betrifft sowohl Ventile als auch Hydraulikventile. Jedes Ventil kann hierbei als Hydraulikventil ausgelegt und jedes Hydraulikventil kann als Ventil ausgelegt werden.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

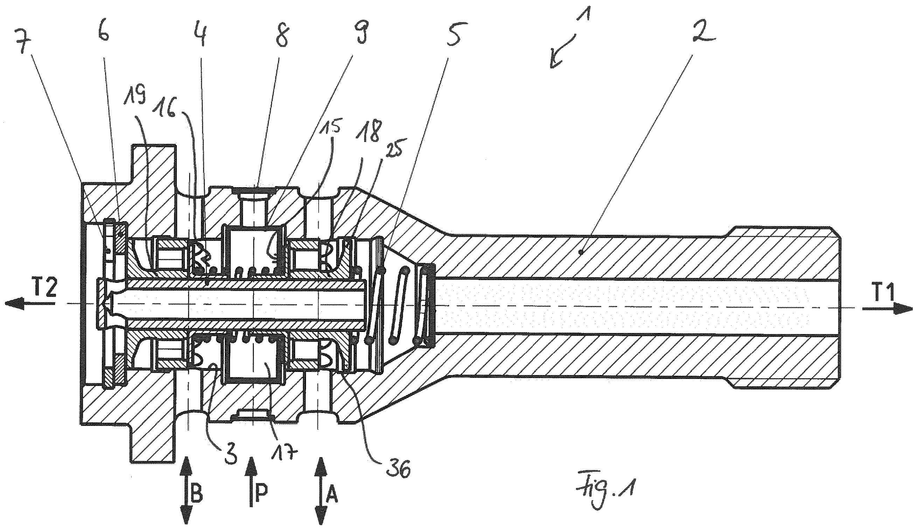

Figur 1 zeigt ein Hydraulikventil 1 zur Verstellung eines nicht dargestellten Schwenkmotorverstellers nach einem Ausführungsbeispiel der Erfindung in einer ersten Schaltstellung 10, dargestellt in einem Längsschnitt. Das Hydraulikventil 1 umfasst eine Buchse 2 mit einem in einer Bohrung 3 entlang einer Längsrichtung L verschiebbar angeordneten Kolben 4. Der Kolben 4 ist mit einer Schraubendruckfeder 5 an der Buchse 2 bzw. an einer durch einen Ring 7 in der Buchse 2 angeordneten Scheibe 6 abgestützt.

Die Buchse 2 weist einen Versorgungsanschluss P zum Zuführen eines Hydraulikfluids und einen ersten Arbeitsanschluss A und einen zweiten Arbeitsanschluss B auf, welche jeweils als radiale Ausnehmung bzw. mehrere Radialausnehmungen in der Buchse in der Reihenfolge A - P - B vorgesehen sind. Der Versorgungsanschluss P ist durch ein außen an der Buchse 2 angeordnetes Sieb 8 vor Verunreinigungen geschützt. Ferner ist auf einer Buchseninnenseite ein Bandrückschlagventil 9 im Bereich des Versorgungsabschlusses angeordnet, um einen Rückfluss von Hydraulikfluid in Richtung Pumpe zu verhindern.

Das Hydraulikventil 1 umfasst einen ersten und einen zweiten Tankabflussanschluss T1, T2 zum Ableiten des Hydraulikfluids, welche jeweils axial ausgebildet sind.

Dem ersten Arbeitsanschluss A und dem zweiten Arbeitsanschluss B ist jeweils ein Rückschlagventil 15, 16 zugeordnet, wobei der erste Arbeitsanschluss A und der zweite Arbeitsanschluss B durch ein Verschieben des Kolbens 4 über wenigstens eines der Rückschlagventile 15, 16 wechselweise miteinander und/oder mit dem Versorgungsanschluss P und/oder mit einem der Tankabflussanschlüsse T1, T2 verbindbar sind.

Im Rahmen der Erfindung ist es möglich, am Ventil nur einen einzigen Tankabflussanschluss T vorzusehen. Dabei kann beispielsweise das in Richtung Tank abgeleitete Hydraulikfluid durch den Kolben 4 geleitet werden. Die beschriebenen Tankabflussanschlüsse T1 und T2 werden in diesem Fall als ein dem jeweiligen Arbeitsanschluss A bzw. B zugeordneter Tankabfluss verstanden, wobei beide mittels dem einzigen Tankabflussanschluss T aus dem Ventil herausgeleitet werden.

Erfindungsgemäß weist das Hydraulikventil 1 fünf Schaltstellungen 10 - 14 auf, wobei in einer ersten, in Figur 1 dargestellten Schaltstellung 10 des Kolbens 4 der zweite Arbeitsanschluss B über die Bohrung 3 und einen darin ausgebildeten Ringraum 17 um den Kolben 4 herum mit dem Versorgungsanschluss P und der erste Arbeitsanschluss A über die Bohrung 3 und einem weiter unten näher erläuterter Fluidpfad zwischen einem ersten Kolbenaufsatz 18 und Buchseninnenseite mit dem ersten Tankabflussanschluss T1 verbunden ist.

Auf der entgegengesetzten Seite des Kolbens 4 verschließt ein äußerer Ringsteg 27 den zweiten Tankabflussanschluss T2 vollständig. Die erste Schaltstellung kann auch als erste Endposition des Kolbens 4 verstanden werden.

Überschreitet dabei ein an dem ersten Arbeitsanschluss A anliegender Druck einen bestimmten Schwellenwert, ist zusätzlich ein Fluidpfad von dem ersten Arbeitsanschluss A zu dem zweiten Arbeitsanschluss B über das dem ersten Arbeitsanschluss A zugeordnete Rückschlagventil 15 öffenbar und das Hydraulikfluid wird in einer Fast-Phaser-Charakteristik zum zweiten Arbeitsanschluss B durchgereicht.

In einer zweiten Schaltstellung 11 des Kolbens 4 ist der zweite Arbeitsanschluss B mit dem Versorgungsanschluss P verbunden und eine Verbindung zwischen dem ersten Arbeitsanschluss A mit dem ersten Tankabflussanschluss T1 ist durch den Kolbenaufsatz 18, insbesondere durch den äußeren Ringsteg 25, unterbrochen, wobei auch in dieser Stellung der Fluidpfad von dem ersten Arbeitsanschluss A zu dem zweiten Arbeitsanschluss B über das dem ersten Arbeitsanschluss A zugeordnete Rückschlagventil 15 öffenbar ist. Ebenso ist der Tankabflussanschluss T2 durch den Ringsteg 27 verschlossen, welcher an dem Kolbenaufsatz 19 angeordnet ist. In dieser Stellung weist das Hydraulikventil 1 eine reine Fast-Phaser-Charakteristik auf. Diese zweite Schaltstellung kann auch als erste Position des Kolbens 4 innerhalb des Regelbereichs der Fast-Phaser-Charakteristik verstanden werden.

In einer dritten Schaltstellung 12 des Kolbens 4 ist dieser in einer Mittenstellung positioniert, in welcher eine Verbindung zwischen den Arbeitsanschlüssen A, B und dem Versorgungsanschluss P sowie den Tankabflussanschlüssen T1, T2 komplett unterbrochen ist. Diese dritte Schaltstellung kann auch als zweite Position des Kolbens 4 innerhalb des Regelbereichs der Fast-Phaser-Charakteristik verstanden werden.

In einer vierten Schaltstellung 13 des Kolbens 4 ist der erste Arbeitsanschluss A mit dem Versorgungsanschluss P verbunden und eine Verbindung zwischen dem zweiten Arbeitsanschluss B mit dem zweiten Tankabflussanschluss T2 ist durch einen zweiten Kolbenaufsatz 19, insbesondere durch den äußeren Ringsteg 27, unterbrochen. Ein Fluidpfad von dem zweiten Arbeitsanschluss B zu dem ersten Arbeitsanschluss A ist über das dem zweiten Arbeitsanschluss B zugeordnete Rückschlagventil 16 durch einen, einen Schwellenwert überschreitenden Druck öffenbar. Ebenso ist der Tankabflussanschluss T1 durch den Ringsteg 25 verschlossen, welcher an dem Kolbenaufsatz 18 angeordnet ist. Diese dritte Schaltstellung kann auch als dritte Position des Kolbens 4 innerhalb des Regelbereichs der Fast-Phaser-Charakteristik verstanden werden.

In einer fünften Schaltstellung des Kolbens 4 befindet sich dieser in einer zweiten Endposition. Hier ist der erste Arbeitsanschluss A über die Bohrung 3 und einen darin ausgebildeten Ringraum 17 um den Kolben 4 herum mit dem Versorgungsanschluss P und der zweite Arbeitsanschluss B ist über die Bohrung 3 und einem weiter unten näher erläuterter Fluidpfad zwischen dem zweiten Kolbenaufsatz 19 und Buchseninnenseite mit dem zweiten Tankabflussanschluss T2 verbunden. Auf der entgegengesetzten Seite des Kolbens 4 verschließt ein äußerer Ringsteg 25 den zweiten Tankabflussanschluss T1 vollständig. Die fünfte Schaltstellung kann auch als zweite Endposition des Kolbens 4 verstanden werden.

Überschreitet dabei ein an dem zweiten Arbeitsanschluss B anliegender Druck einen bestimmten Schwellenwert, ist zusätzlich ein Fluidpfad von dem zweiten Arbeitsanschluss B zu dem ersten Arbeitsanschluss A über das dem zweiten Arbeitsanschluss B zugeordnete Rückschlagventil 16 öffenbar.

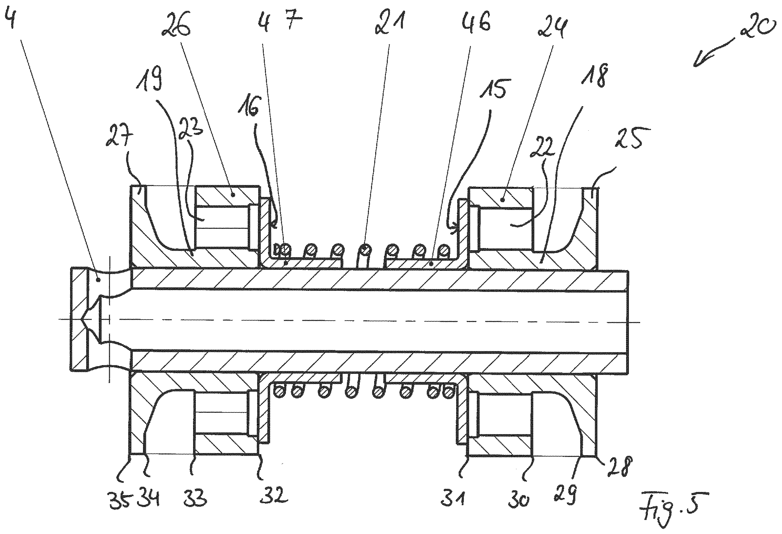

Wie insbesondere Figur 5 zu entnehmen ist, ist dem ersten Arbeitsanschluss A und dem zweiten Arbeitsanschluss B jeweils ein Rückschlagventil 15, 16 auf der Außenseite des Kolbens 4 zugeordnet. Diese sind jeweils an den Kolbenaufsätzen 18, 19 angeordnet, welcher den Kolben 4 umgibt und mit dem Kolben 4 starr beispielsweise durch Aufpressen oder Verschweißen verbunden ist. Hierdurch wird ein möglichst kompakter Aufbau des Hydraulikventils ermöglicht und die so entstandene Kolbenbaugruppe 20 kann einfach und kostengünstig ausgebildet werden.

Die Rückschlagventile 15, 16 sind jeweils als scheibenförmige Schließkörper vorgesehen, welche durch eine gemeinsame Druckfeder 21 gegen die Kolbenaufsätze 18, 19 vorgespannt sind und so Öffnungen 22, 23 verschließen, durch welche ab dem vorgestehend beschriebenen Druckschwellenwert Hydraulikfluid durch die Rückschlagventile 15, 16 durchleitbar ist. So kann vorteilhaft eine vormontierte Kolbenbaugruppe 20 vorgesehen werden, welche einfach in die Buchse 2 montiert werden kann.

Axiale Vorsprünge 46, 47 der Rückschlagventile 15, 16 erlauben eine gesicherte axiale Verschiebung auf dem Kolben 4.

Die Kolbenaufsätze 18, 19 weisen jeweils zwei innere Ringstege 24, 25 und zwei äußere Ringstege 26, 27 auf, welche jeweils zwei mit Ausnehmungen in der Buchse 2 zusammenwirkende Steuerkanten 28, 29, 30, 31, 32, 33, 34, 35 aufweisen. Durch diese Steuerkanten 28 bis 35 kann der Volumenstrom des Hydraulikfluids derart verbessert gesteuert werden, dass eine deutliche Steigerung der Verstellgeschwindigkeit, insbesondere im oberen Drehzahlbereich, sowie ein besseres Kraftverhalten erzielt wird.

Dabei wirken die Steuerkanten 28 bis 35 der inneren und äußeren Ringstege 24 bis 27 mit den Arbeitsanschlüssen A, B als radiale Ausnehmungen 38, 39 in der Buchse 2 und zwei nutenförmigen Ausnehmungen 36, 37 im Bereich der Bohrung 3 zusammen, wobei die nutenförmigen Ausnehmungen 36, 37 in axialer Richtung jeweils zwischen dem Arbeitsanschluss A bzw. B und dem dazugehörigen Tankabflussanschluss T1 bzw. T2 angeordnet sind. Die nutenförmigen Ausnehmungen 36, 37 erlauben im Zusammenspiel mit den Steuerkanten 28 bis 30 und 33 bis 35 ein stellungsabhängiges Öffnen und Schließen der Tankabflussanschlüsse T1, T2, indem in den Schaltstellungen 10 und 14 jeweils zwischen den äußeren Ringstegen 25 bzw. 27 der Kolbenaufsätze 18 bzw. 19 und der Buchseninnenseite ein Fluidpfad zwischen dem ersten bzw. dem zweiten Arbeitsanschluss A bzw. mit dem ersten bzw. dem zweiten Tankabflussanschluss T1 bzw. T2 geöffnet wird. So befindet sich in der in Figur 1 gezeigten ersten Schaltstellung 10 der äußere Ringsteg 25 des ersten Kolbenaufsatzes 18 im Bereich der nutförmigen Ausnehmung 36 und ein Fluidstrom zwischen dem Ringsteg 25 und der Buchseninnenseite in Richtung Tankabflussanschluss T1 ist möglich. Der äußere Ringsteg 27 des zweiten Kolbenaufsatzes 19 befindet sich dagegen außerhalb der nutförmigen Ausnehmung 37, so dass durch die geschlossenen Steuerkanten 34, 35 kein Fluidstrom in Richtung Tankabflussanschluss T2 möglich ist.

Während der zweiten und der vierten Schaltstellung 11 und 13 des Hydraulikventils 1 befinden sich beide äußeren Ringstege 25 und 27 außerhalb der nutenförmigen Ausnehmungen 36 und 37, so dass durch die geschlossenen Steuerkanten 34, 35, 28, 29 kein Fluidstrom in Richtung der Tankabflussanschlüsse T1 bzw.T2 möglich ist.

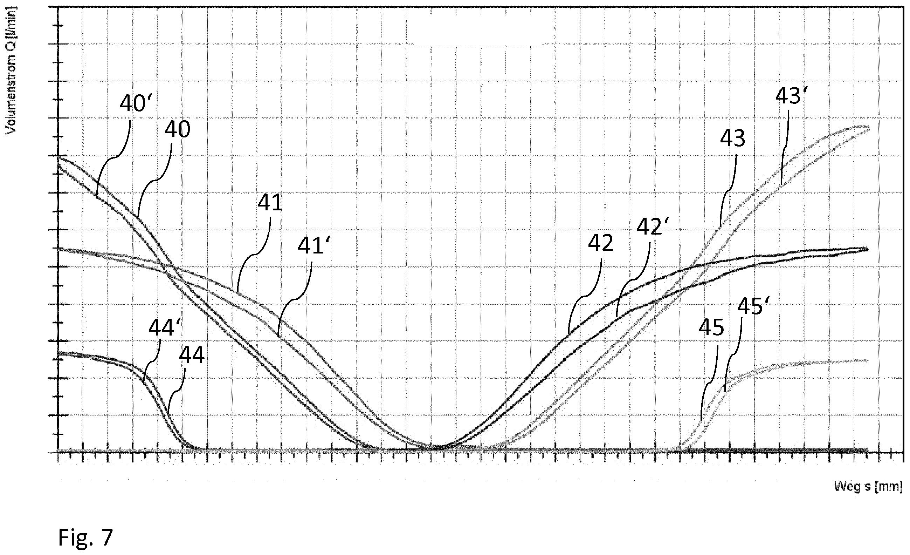

Figur 7 zeigt die Volumenstrom-Weg-Kennlinie des Hydraulikventils 1. Die Volumenstrom-Weg-Kennlinie zeigt den resultierenden Volumenstrom, abhängig von der Position (fünf Schaltstellungen 10 bis 14) des Kolbens 4 aus.

Die Linien 40 und 40' zeigen den Volumenstrom von A nach B und die Linien 41 und 41' den Volumenstrom von P nach B während der ersten und der zweiten Schaltstellung 10 und 11.

Etwas nach dem halben Gesamtweg ist die Mittelstellung 12 erreicht, in welcher eine Verbindung zwischen den Arbeitsanschlüssen A, B und dem Versorgungsanschluss P sowie den Tankabflussanschlüssen T1, T2 komplett unterbrochen ist.

Die Linien 42 und 42' zeigen den Volumenstrom von P nach A und die Linien 43 und 43' den Volumenstrom von B nach A während der vierten und der fünften Schaltstellung 13 und 14.

Wie durch die Linien 44 und 44' ersichtlich ist, ist die Verbindung A nach T1 nur in der ersten Schaltstellung 10 offen. Die Verbindung B nach T2 ist, wie durch die Linien 45 und 45' dargestellt, nur in der fünften Schaltstellung 14 geöffnet.

## Patentansprüche

1. Ventil (1) für einen Schwenkmotorversteller einer Nockenwelle, mit
einer Buchse (2) mit einem in einer Bohrung (3) entlang einer Längsrichtung (L) zwischen einer ersten Endposition und einer zweiten Endposition verschiebbar angeordneten Kolben (4),
einem Versorgungsanschluss (P) zum Zuführen eines Hydraulikfluids, wenigstens einem ersten Arbeitsanschluss (A) und einem zweiten Arbeitsanschluss (B), sowie
wenigstens einem ersten und einem zweiten Tankabflussanschluss (T1, T2) zum Ableiten des Hydraulikfluids,
wobei der erste Arbeitsanschluss (A) und der zweite Arbeitsanschluss (B) durch geeignetes Positionieren des Kolbens miteinander fluidmäßig verbindbar ausgebildet sind,
wobei
der Kolben (4) jeweils an seinen axial außenliegenden Enden angeordnete äußere Ringstege (25, 27) aufweist, um den Tankabflussanschluss (T2) in der ersten Endposition vollständig zu verschließen und den Tankabflussanschluss (T1) in der zweiten Endposition vollständig zu verschließen, und wobei die Buchse (2) im Bereich der Bohrung (3) zwei nutenförmige Ausnehmungen (36, 37) aufweist, welche jeweils den äußeren Ringstegen (25, 27) zugeordnet sind, **dadurch gekennzeichnet, dass** diese zwei nutenförmigen Ausnehmungen jeweils in Längsrichtung zwischen dem Arbeitsanschluss (A, B) und dem dazugehörigen Tankabflussanschluss (T1, T2) angeordnet sind.

2. Ventil nach Anspruch 1, **dadurch gekennzeichnet, dass** der Kolben (4) zwischen den äußeren Ringstegen (25, 27) zwei innere Ringstege (24, 26) aufweist, welche jeweils dem ersten Arbeitsanschluss (A) und dem zweiten Arbeitsanschluss (B) zugeordnet sind.

3. Ventil nach einem der Ansprüche 1 oder 2, **dadurch gekennzeichnet, dass** der Kolben (4) in eine erste Position überführbar ist, wobei beide Tankabflussanschlüsse (T1, T2) durch die äußeren Ringstege (25, 27) verschlossen ausgebildet sind und der zweite Arbeitsanschluss (B) mit dem Versorgungsanschluss (P) sowie der erste Arbeitsanschluss (A) mit dem zweiten Arbeitsanschluss (B) fluidmäßig verbindbar ausgebildet sind.

4. Ventil nach einem der Ansprüche 1 bis 3, **dadurch gekennzeichnet, dass** der Kolben (4) in eine zweite Position überführbar ist, wobei beide Tankabflussanschlüsse (T1, T2) durch die äußeren Ringstege (25, 27) verschlossen ausgebildet sind und der erste Arbeitsanschluss (A) sowie der zweite Arbeitsanschluss (B) jeweils durch die inneren Ringstege (24, 26) verschlossen ausgebildet sind.

5. Ventil nach einem der Ansprüche 1 bis 4, **dadurch gekennzeichnet, dass** der Kolben (4) in eine dritte Position überführbar ist, wobei beide Tankabflussanschlüsse (T1, T2) durch die äußeren Ringstege (25, 27) verschlossen ausgebildet sind und der erste Arbeitsanschluss (A) mit dem Versorgungsanschluss (P) sowie der erste Arbeitsanschluss (A) mit dem zweiten Arbeitsanschluss (B) fluidmäßig verbindbar ausgebildet sind.

6. Ventil nach einem der Ansprüche 1 bis 5, **dadurch gekennzeichnet, dass** dem ersten Arbeitsanschluss (A) und dem zweiten Arbeitsanschluss (B) jeweils ein Rückschlagventil (15, 16) zugeordnet ist und der erste Arbeitsanschluss (A) und der zweite Arbeitsanschluss (B) durch ein Verschieben des Kolbens (4) über wenigstens eines der Rückschlagventile (15, 16) wechselweise miteinander und/oder mit dem Versorgungsanschluss (P) und/oder mit einem der Tankabflussanschlüsse (T1, T2) verbindbar sind,

7. Schwenkmotorversteller mit einem Hydraulikventil (1) nach einem der vorangegangenen Ansprüche, wobei das Ventil (1) als Zentralventil vorgesehen ist.

8. Verfahren zum Betreiben eines Ventils (1) gemäß einem der Ansprüche 1 bis 7, wobei in der ersten Endposition
der Tankabflussanschluss (T2) durch einen äußeren Ringsteg (27) vollständig verschlossen wird,
der Tankabflussanschluss (T1) durch einen Ringspalt zwischen einem äußeren Ringsteg (25) und einer nutenförmigen Ausnehmung (36) freigegeben wird,
der erste Arbeitsanschluss (A) mit dem zweiten Arbeitsanschluss (B) fluidmäßig verbunden wird, und
der zweite Arbeitsanschluss (B) mit dem Versorgungsanschluss (P) fluidmäßig verbunden wird.

9. Verfahren zum Betreiben eines Ventils (1) gemäß Anspruch 8, wobei in der ersten Position
die Tankabflussanschlüsse (T1, T2) durch die äußeren Ringstege (25, 27) vollständig verschlossen werden,
der erste Arbeitsanschluss (A) mit dem zweiten Arbeitsanschluss (B) fluidmäßig verbunden wird, und
der zweite Arbeitsanschluss (B) mit dem Versorgungsanschluss (P) fluidmäßig verbunden wird.

10. Verfahren zum Betreiben eines Ventils (1) gemäß Anspruch 8 oder 9, wobei in der zweiten Position
die Tankabflussanschlüsse (T1, T2) durch die äußeren Ringstege (25, 27) vollständig verschlossen werden, und
der erste Arbeitsanschluss (A) sowie der zweite Arbeitsanschluss (B) jeweils durch die inneren Ringstege (24, 26) fluidmäßig verschlossen werden.

11. Verfahren zum Betreiben eines Ventils (1) gemäß einem der Ansprüche 8 bis 10, wobei in der dritten Position
die Tankabflussanschlüsse (T1, T2) durch die äußeren Ringstege (25, 27) vollständig verschlossen werden,
der erste Arbeitsanschluss (A) mit dem zweiten Arbeitsanschluss (B) fluidmäßig verbunden wird, und
der erste Arbeitsanschluss (A) mit dem Versorgungsanschluss (P) fluidmäßig verbunden wird.

12. Verfahren zum Betreiben eines Ventils (1) gemäß einem der Ansprüche 8 bis 11, wobei in der zweiten Endposition
der Tankabflussanschluss (T1) durch einen äußeren Ringsteg (25) vollständig verschlossen wird,
der Tankabflussanschluss (T2) durch einen Ringspalt zwischen einem äußeren Ringsteg (27) und einer nutenförmigen Ausnehmung (37) freigegeben wird,
der erste Arbeitsanschluss (A) mit dem zweiten Arbeitsanschluss (B) fluidmäßig verbunden wird, und
der erste Arbeitsanschluss (A) mit dem Versorgungsanschluss (P) fluidmäßig verbunden wird.

13. Verfahren zum Betreiben eines Ventils (1) gemäß einem der Ansprüche 8 bis 12,
wobei das Überführen des Kolbens (4) zwischen der ersten Endposition und einer zweiten Endposition stufenlos erfolgt.

## Claims

1. Valve (1) for an oscillating motor adjuster of a camshaft, with
a bushing (2) with a piston (4) which is arranged in a bore (3) such that it can be displaced along a longitudinal direction (L) between a first end position and a second end position,
a supply connector (P) for feeding in a hydraulic fluid, at least one first working connector (A) and one second working connector (B), and
at least one first and one second tank outflow connector (T1, T2) for discharging the hydraulic fluid,
the first working connector (A) and the second working connector (B) being configured such that they can be connected fluidically to one another by way of suitable positioning of the piston,
the piston (4) having outer annular webs (25, 27) which are arranged in each case at its axially outer ends, in order to completely close the tank outflow connector (T2) in the first end position and to completely close the tank outflow connector (T1) in the second end position, and the bushing (2) having two groove-shaped recesses (36, 37) in the region of the bore (3), which recesses (36, 37) are assigned in each case to the outer annular webs (25, 27), **characterized in that** the said two groove-shaped recesses are arranged in each case in the longitudinal direction between the working connector (A, B) and the associated tank outflow connector (T1, T2).

2. Valve according to Claim 1, **characterized in that** the piston (4) has two inner annular webs (24, 26) between the outer annular webs (25, 27), which inner annular webs (24, 26) are assigned in each case to the first working connector (A) and the second working connector (B).

3. Valve according to either of Claims 1 and 2, **characterized in that** the piston (4) can be transferred into a first position, the two tank outflow connectors (T1, T2) being configured such that they are closed by way of the outer annular webs (25, 27), and the second working connector (B) being configured such that it can be connected fluidically to the supply connector (P), and the first working connector (A) being configured such that it can be connected fluidically to the second working connector (B).

4. Valve according to one of Claims 1 to 3, **characterized in that** the piston (4) can be transferred into a second position, the two tank outflow connectors (T1, T2) being configured such that they are closed by way of the outer annular webs (25, 27), and the first working connector (A) and the second working connector (B) being configured such that they are closed in each case by way of the inner annular webs (24, 26).

5. Valve according to one of Claims 1 to 4, **characterized in that** the piston (4) can be transferred into a third position, the two tank outflow connectors (T1, T2) being configured such that they are closed by way of the outer annular webs (25, 27), and the first working connector (A) being configured such that it can be connected fluidically to the supply connector (P), and the first working connector (A) being configured such that it can be connected fluidically to the second working connector (B).

6. Valve according to one of Claims 1 to 5, **characterized in that** the first working connector (A) and the second working connector (B) are assigned in each case one check valve (15, 16), and the first working connector (A) and the second working connector (B) can be connected alternately to one another and/or to the supply connector (P) and/or to one of the tank outflow connectors (T1, T2) via at least one of the check valves (15, 16) by way of a displacement of the piston (4).

7. Oscillating motor adjuster with a hydraulic valve (1) according to one of the preceding claims, the valve (1) being provided as a central valve.

8. Method for operating a valve (1) according to one of Claims 1 to 7, in the first position:
the tank outflow connector (T2) being closed completely by way of an outer annular web (27),
the tank outflow connector (T1) being released by way of an annular gap between an outer annular web (25) and a groove-shaped recess (36),
the first working connector (A) being connected fluidically to the second working connector (B), and
the second working connector (B) being connected fluidically to the supply connector (P).

9. Method for operating a valve (1) according to Claim 8, in the first position:
the tank outflow connectors (T1, T2) being closed completely by way of the outer annular webs (25, 27),
the first working connector (A) being connected fluidically to the second working connector (B), and
the second working connector (B) being connected fluidically to the supply connector (P).

10. Method for operating a valve (1) according to Claim 8 or 9, in the second position:
the tank outflow connectors (T1, T2) being closed completely by way of the outer annular webs (25, 27), and the first working connector (A) and the second working connector (B) being closed fluidically in each case by way of the inner annular webs (24, 26).

11. Method for operating a valve (1) according to one of Claims 8 to 10, in the third position:
the tank outflow connectors (T1, T2) being closed completely by way of the outer annular webs (25, 27),
the first working connector (A) being connected fluidically to the second working connector (B), and
the first working connector (A) being connected fluidically to the supply connector (P).

12. Method for operating a valve (1) according to one of Claims 8 to 11, in the second position:
the tank outflow connector (T1) being closed completely by way of an outer annular web (25),
the tank outflow connector (T2) being released by way of an annular gap between an outer annular web (27) and a groove-shaped recess (37),
the first working connector (A) being connected fluidically to the second working connector (B), and
the first working connector (A) being connected fluidically to the supply connector (P).

13. Method for operating a valve (1) according to one of Claims 8 to 12, the transfer of the piston (4) between the first end position and a second end position taking place in an infinitely variable manner.

## Revendications

1. Soupape (1) pour un dispositif de réglage à moteur oscillant d'un arbre à cames, comportant
une douille (2) dotée d'un piston (4) disposé de manière déplaçable dans un alésage (3) le long d'une direction longitudinale (L) entre une première position finale et une deuxième position finale,
un raccord d'alimentation (P) pour l'acheminement d'un fluide hydraulique,
au moins un premier raccord de travail (A) et un deuxième raccord de travail (B),
ainsi qu'au moins un premier et un deuxième raccord de sortie de réservoir (T1, T2) pour l'évacuation du fluide hydraulique,
le premier raccord de travail (A) et le deuxième raccord de travail (B) étant réalisés de manière à pouvoir être reliés fluidiquement l'un à l'autre par positionnement approprié du piston,
le piston (4) comprenant respectivement des listels extérieurs (25, 27) disposés à ses extrémités axialement extérieures, afin de fermer complètement le raccord de sortie de réservoir (T2) dans la première position finale et de fermer complètement le raccord de sortie de réservoir (T1) dans la deuxième position finale,
et la douille (2) comprenant, dans la région de l'alésage (3), deux évidements (36, 37) en forme de rainures, lesquels sont respectivement associés aux listels extérieurs (25, 27), **caractérisée en ce que** ces deux évidements en forme de rainures sont disposés respectivement entre le raccord de travail (A, B) et le raccord de sortie de réservoir (T1, T2) correspondant dans la direction longitudinale.

2. Soupape selon la revendication 1, **caractérisée en ce que** le piston (4) comprend, entre les listels extérieurs (25, 27), deux listels intérieurs (24, 26), lesquels sont associés respectivement au premier raccord de travail (A) et au deuxième raccord de travail (B).

3. Soupape selon l'une des revendications 1 et 2, **caractérisée en ce que** le piston (4) peut être transféré à une première position, les deux raccords de sortie de réservoir (T1, T2) étant réalisés de manière fermée par les listels extérieurs (25, 27) et le deuxième raccord de travail (B) étant réalisé de manière à pouvoir être relié fluidiquement au raccord d'alimentation (P) et le premier raccord de travail (A) étant réalisé de manière à pouvoir être relié fluidiquement au deuxième raccord de travail (B).

4. Soupape selon l'une des revendications 1 à 3, **caractérisée en ce que** le piston (4) peut être transféré à une deuxième position, les deux raccords de sortie de réservoir (T1, T2) étant réalisés de manière fermée par les listels extérieurs (25, 27) et le premier raccord de travail (A) et le deuxième raccord de travail (B) étant réalisés de manière fermée respectivement par les listels intérieurs (24, 26).

5. Soupape selon l'une des revendications 1 à 4, **caractérisée en ce que** le piston (4) peut être transféré à une troisième position, les deux raccords de sortie de réservoir (T1, T2) étant réalisés de manière fermée par les listels extérieurs (25, 27) et le premier raccord de travail (A) étant réalisé de manière à pouvoir être relié fluidiquement au raccord d'alimentation (P) et le premier raccord de travail (A) étant réalisé de manière à pouvoir être relié fluidiquement au deuxième raccord de travail (B) .

6. Soupape selon l'une des revendications 1 à 5, **caractérisée en ce qu'**une soupape anti-retour (15, 16) est associée respectivement au premier raccord de travail (A) et au deuxième raccord de travail (B), et le premier raccord de travail (A) et le deuxième raccord de travail (B), par un déplacement du piston (4), peuvent être, par le biais d'au moins l'une des soupapes anti-retour (15, 16), reliés alternativement l'un à l'autre et/ou au raccord d'alimentation (P) et/ou à l'un des raccords de sortie de réservoir (T1, T2).

7. Dispositif de réglage à moteur oscillant doté d'une soupape (1) selon l'une des revendications précédentes, la soupape (1) étant prévue comme soupape centrale.

8. Procédé de fonctionnement d'une soupape (1) selon l'une des revendications 1 à 7, dans lequel, dans la première position finale,
le raccord de sortie de réservoir (T2) est fermé complètement par un listel extérieur (27),
le raccord de sortie de réservoir (T1) est dégagé par un interstice annulaire entre un listel extérieur (25) et un évidement (36) en forme de rainure,
le premier raccord de travail (A) est relié fluidiquement au deuxième raccord de travail (B), et
le deuxième raccord de travail (B) est relié fluidiquement au raccord d'alimentation (P).

9. Procédé de fonctionnement d'une soupape (1) selon la revendication 8, dans lequel, dans la première position,
les raccords de sortie de réservoir (T1, T2) sont complètement fermés par les listels extérieurs (25, 27), le premier raccord de travail (A) est relié fluidiquement au deuxième raccord de travail (B) , et
le deuxième raccord de travail (B) est relié fluidiquement au raccord d'alimentation (P).

10. Procédé de fonctionnement d'une soupape (1) selon la revendication 8 ou 9, dans lequel, dans la deuxième position,
les raccords de sortie de réservoir (T1, T2) sont complètement fermés par les listels extérieurs (25, 27), et
le premier raccord de travail (A) et le deuxième raccord de travail (B) sont fermés fluidiquement respectivement par les listels intérieurs (24, 26).

11. Procédé de fonctionnement d'une soupape (1) selon l'une des revendications 8 à 10, dans lequel, dans la troisième position,
les raccords de sortie de réservoir (T1, T2) sont complètement fermés par les listels extérieurs (25, 27), le premier raccord de travail (A) est relié fluidiquement au deuxième raccord de travail (B), et
le premier raccord de travail (A) est relié fluidiquement au raccord d'alimentation (P).

12. Procédé de fonctionnement d'une soupape (1) selon l'une des revendications 8 à 11, dans lequel, dans la deuxième position finale,
le raccord de sortie de réservoir (T1) est fermé complètement par un listel extérieur (25),
le raccord de sortie de réservoir (T2) est dégagé par un interstice annulaire entre un listel extérieur (27) et un évidement (37) en forme de rainure,
le premier raccord de travail (A) est relié fluidiquement au deuxième raccord de travail (B), et
le premier raccord de travail (A) est relié fluidiquement au raccord d'alimentation (P).

13. Procédé de fonctionnement d'une soupape (1) selon l'une des revendications 8 à 12, dans lequel le transfert du piston (4) entre la première position finale et une deuxième position finale s'effectue de manière continue.
